# EUROPÄISCHE PATENTSCHRIFT

(11) **EP 1 779 009 B1**
(45) Veröffentlichungstag und Bekanntmachung des Hinweises auf die Patenterteilung: **28.10.2009**
(21) Anmeldenummer: 05773865.0
(22) Anmeldetag: 05.08.2005
(51) Int. Cl.: F16K 15/06, F02M 69/46, F02M 55/02, F02M 55/04, F02M 37/00

(54) **RÜCKSCHLAGVENTIL**
CHECK VALVE
CLAPET ANTIRETOUR

(30) Priorität: 13.08.2004 DE 102004039297; 06.10.2004 DE 102004048593
(43) Veröffentlichungstag der Anmeldung: 02.05.2007
(73) Patentinhaber: ROBERT BOSCH GMBH, 70442 Stuttgart (DE)
(72) Erfinder: ITTLINGER, Ralph, 71287 Weissach (DE); PEETZ, Andreas, 71640 Ludwigsburg (DE); HAARER, Werner, 75428 Illingen (DE); YERLIKAYA, Goekhan, 71739 Oberriexingen (DE)
(86) Internationale Anmeldenummer: PCT/EP2005/053863
(87) Internationale Veröffentlichungsnummer: WO 2006/018397

(56) Entgegenhaltungen:
- DE-A1- 10 224 430
- DE-A1- 19 507 321
- US-A- 2 268 119
- US-A- 3 811 470
- US-A- 4 886 085
- US-A- 5 785 025

## Beschreibung

### Stand der Technik

Die Erfindung geht aus von einem Rückschlagventil nach der Gattung des Hauptanspruchs.

Es ist schon ein Rückschlagventil aus der DE 195 07 321 C2 bekannt, mit einem Schliesskörper, der mit einem Ventilsitz zusammenwirkt, an einer weitesten Stelle einen maximalen Durchmesser aufweist und in einer Ventilkammer axial beweglich angeordnet ist, mit einem Drosselspalt zwischen einer Wandung der Ventilkammer und der weitesten Stelle des Schliesskörpers, wobei die Wandung der Ventilkammer derart ausgebildet ist, dass sich der Drosselspalt bei einem Hub des Schliesskörpers in vom Ventilsitz abgewandter Richtung in einem Entdrosselbereich konusförmig erweitert. Der Drosselspalt wird mit zunehmendem Hub in Öffnungsrichtung kontinuierlich vergrößert, so dass die auf den Schliesskörper ausgeübte Impulskraft mit zunehmendem Hub in Öffnungsrichtung sinkt. Nachteilig ist, dass das Vergrößern des Drosselspaltes unmittelbar nach dem Abheben des Schliesskörpers vom Ventilsitz beginnt und der Schliesskörper dadurch nur einen vergleichsweise geringen Hub mit einem geringen Abstand zum Ventilsitz ausführt. Bei ungünstigen Betriebsbedingungen, beispielsweise bei Kaltstart der Brennkraftmaschine oder bei der Heißbenzinförderung, kann es zu einem Schwingen des Schliesskörpers kommen. Durch den geringen Abstand des Schliesskörpers zum Ventilsitz ist es möglich, dass der Schliesskörper bei seiner Schwingungsbewegung mit einer hohen Schwingungsfrequenz an dem Ventilsitz anschlägt, so dass ein hoher Verschleiss an dem Schliesskörper und störende Geräusche auftreten.

US 3 811 470 offenbart ein Rückschlagventil gemäß dem Oberbegriff des Anspruchs 1.

### Vorteile der Erfindung

Das erfindungsgemäße Rückschlagventil mit den kennzeichnenden Merkmalen des Hauptanspruchs hat demgegenüber den Vorteil, daß auf einfache Art und Weise eine Verbesserung dahingehend erzielt wird, dass der Verschleiss am Schliesskörper verringert wird, indem stromauf des Entdrosselbereichs ein Bereich mit konstantem Drosselspalt vorgesehen ist. Auf diese Weise wird der Schliesskörper bei geöffnetem Rückschlagventil in eine Position mit größerem Abstand zum Ventilsitz gebracht, so dass ein Anschlagen des Schliesskörpers an den Ventilsitz vermieden und der dadurch verursachte Verschleiss verringert wird. Außerdem wird die Entstehung von störenden Geräuschen verhindert. Desweiteren wird durch den größeren Abstand zum Ventilsitz erreicht, dass das Rückschlagventil weniger schmutzempfindlich ist.

Am Umfang der Ventilkammer sind mehrere in axialer Richtung bezüglich einer Ventilachse verlaufende Rippen vorgesehen, da der Schliesskörper auf diese Weise eine besonders gute axiale Führung erhält. Die Rippen weisen eine unterschiedliche in Umfangsrichtung der Ventilkammer gemessene Breite auf, der auf diese Weise eine asymmetrische Umströmung des Schliesskörpers erreicht wird, die eine Dämpfung des Schwingverhaltens des Schliesskörpers bewirkt.

Durch die in den Unteransprüchen aufgeführten Maßnahmen sind vorteilhafte Weiterbildungen und Verbesserungen des im Hauptanspruch angegebenen Rückschlagventils möglich.

Besonders vorteilhaft ist, wenn sich der Drosselspalt im Entdrosselbereich stufenförmig oder kontinuierlich erweitert. Gemäss einer vorteilhaften Ausführung weist die Wandung der Ventilkammer im Entdrosselbereich einen stufenförmigen Absatz oder eine konusförmige Erweiterung auf. Der stufenförmige Absatz hat gegenüber der kontinuierlichen Erweiterung den Vorteil, dass ein flacherer Druckverlust- und Hubverlauf über dem Durchfluss erzielt wird.

Weiterhin vorteilhaft ist, wenn der Schliesskörper einen mit dem Ventilsitz zusammenwirkenden Schliessabschnitt und einen sich an den Schliessabschnitt anschlicssenden Zylinderabschnitt und/oder einen Führungsabschnitt aufweist, da der Schliesskörper auf diese Weise einen besonders geringen Bauraum benötigt.

Sehr vorteilhaft ist es, wenn die weiteste Stelle des Schliesskörpers an dem Schliessabschnitt oder an dem Zylinderabschnitt vorgesehen ist, da dies besonders strömungsgünstig ist.

### Zeichnung

Ausführungsbeispiele der Erfindung sind in der Zeichnung vereinfacht dargestellt und in der nachfolgenden Beschreibung näher erläutert. Es zeigen Fig. 1 im Schnitt eine Ansicht eines ersten Ausführungsbeispiels des erfindungsgemässen Rückschlagventils, Fig.2 eine Ansicht eines zweiten Ausführungsbeispiels, Fig.3 eine erste Kennlinie und Fig.4 eine zweite Kennlinie des erfindungsgemäßen Rückschlagventils.

### Beschreibung der Ausführungsbeispiele

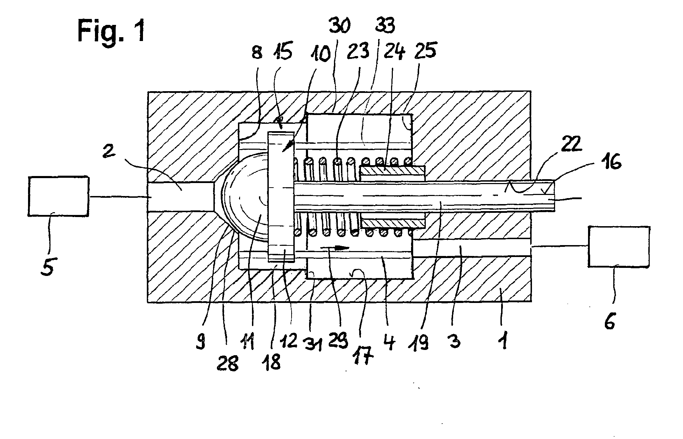

Fig. 1 zeigt im Schnitt eine Ansicht eines ersten Ausführungsbeispiels des erfindungsgemässen Rückschlagventils.

Das erfindungsgemässe Rückschlagventil kann von einem Fluid ausschliesslich in einer Strömungsrichtung durchströmt werden. Damit kann es beispielsweise in einer Kraftstoff-Zufiihreinrichtung einer Brennkraftmaschine eingesetzt werden, die üblicherweise ein Förderaggregat enthält. Das Förderaggregat fördert Kraftstoff unter Druck zu der Brennkraftmaschine. Das Rückschlagventil wird für diese Anwendung zwischen dem Förderaggregat und der Brennkraftmaschine angeordnet und verhindert bei Abschaltung des Förderaggregats, daß Kraftstoff von der Brennkraftmaschine zum Förderaggregat zurückfließt. Der Kraftstoffdruck an der Brennkraftmaschine wird auf diese Weise aufrechterhalten. Das Rückschlagventil kann aber ausdrücklich auch in anderen Zuführeinrichtungen eingesetzt werden, um ein Rückströmen eines beliebigen Fluids zu verhindern.

Das erfindungsgemässe Rückschlagventil hat ein Ventilgehäuse 1 mit einem Eingangskanal 2 und einem Ausgangskanal 3, die beide in eine beispielsweise zylinderförmige Ventilkammer 4 münden. Der Eingangskanal 2 ist beispielsweise mit einem Förderaggregat 5 und der Ausgangskanal 3 mit einer Brennkraftmaschine 6 strömungsverbunden. Der Eingangskanal 2 weist an seinem der Ventilkammer 4 zugewandten Ende einen Ventilsitz 9 auf, der beispielsweise kegelförmig oder kugelförmig ausgeführt ist. Der Ventilsitz 9 ist beispielsweise an einer ersten Stirnseite 8 der Ventilkammer 4 angeordnet.

In der Ventilkammer 4 ist ein mit dem Ventilsitz 9 zusammenwirkender Schliesskörper 10 axial beweglich angeordnet. Der Schliesskörper 10 weist beispielsweise einen dem Ventilsitz 9 zugewandten Schliessabschnitt 11 auf, an den sich ein Zylinderabschnitt 12 in vom Ventilsitz 9 abgewandter Richtung anschliessen kann. Der Schliessabschnitt 11 ist beispielsweise kugelförmig, kugelabschnittsförmig oder kegelförmig ausgebildet. Der Schliessabschnitt 11 ist beispielsweise auf der dem Ventilsitz 9 zugewandten Seite zumindest teilweise aus Gummi hergestellt, kann aber auch aus Kunststoff oder Metall gefertigt sein. Das Ventilgehäuse 1 mit dem Ventilsitz 9 ist beispielsweise aus einem Kunststoff oder Metall hergestellt. Der Schliesskörper 10 weist eine weiteste Stelle 15 auf, die eine maximale radiale Erstreckung bezüglich einer Ventilachse 16 des Rückschlagventils aufweist, beispielsweise einen maximalen Durchmesser. Die weiteste Stelle 15 ist beispielsweise an dem Schliessabschnitt 11 oder an dem Zylinderabschnitt 12 vorgesehen. In radialer Richtung zwischen der weitesten Stelle 15 und einer Wandung 17 der Ventilkammer 4 ist ein beispielsweise ringförmiger Drosselspalt 18 gebildet, der das durch das Rückschlagventil strömende Fluid aufstaut, um eine möglichst grosse auf den Schliesskörper 10 wirkende Öffnungskraft zu erzielen.

Beispielsweise ist der Zylinderabschnitt 12 als weiteste Stelle 15 ausgeführt und weist eine größere radiale Erstreckung bezüglich der Ventilachse 16 auf als der Schliessabschnitt 10. Die Kanten des Zylinderabschnitts 12 können gefast oder abgerundet sein. Auch die Umfangsfläche des Zylinderabschnitts 12 kann einen Radius aufweisen. Auf diese Weise ist die Drosselwirkung der weitesten Stelle 15 besonders strömungsgünstig ausgeführt.

An der dem Ventilsitz 9 abgewandten Stirnseite des Schliessabschnitts 11 oder des Zylinderabschnitts 12 schliesst sich beispielsweise ein Führungsabschnitt 11an, der beispielsweise schaftförmig bzw. zylinderförmig ausgeführt ist und in einem Führungskanal 22 des Ventilgehäuses 1 geführt wird. Der Führungskanal 22 mündet in die Ventilkammer 4.

Auf den Schliesskörper 10 wirkt eine Rückstellfeder 23 in Richtung des Ventilsitzes 9. Die Rückstellfeder 23 ist beispielsweise als Schraubenfeder ausgeführt und um den Führungsabschnitt 19 herum angeordnet. Die Rückstellfeder 23 liegt mit ihrem einen Ende beispielsweise an dem Schliessabschnitt 11 oder an dem Zylinderabschnitt 12 und mit ihrem anderen Ende an der Wandung 17 der Ventilkammer 4 an.

Der Schliesskörper 10 ist in der Ventilkammer 4 zwischen dem Ventilsitz 9 und einem als Hubbegrenzung wirkenden Anschlag 24 axial beweglich gelagert. Der Anschlag 24 ist beispielsweise durch eine Hülse 24 gebildet, die den Führungsabschnitt 19 ringförmig umgibt und beispielsweise radial innerhalb der Rückstellfeder 23 angeordnet ist. Die Hülse 24 ist beispielsweise an einer dem Ventilsitz 9 abgewandten zweiten Stirnseite 25 der Ventilkammer 4 vorgesehen und ragt mit ihrer axialen Erstreckung in die Ventilkammer 4 hinein. Die Hülse 24 kann auch einteilig mit dem Ventilgehäuse 1 verbunden und der Anschlag 24 am Umfang der Ventilkammer 4 ausgebildet sein.

Der Eingangskanal 2 mit dem Ventilsitz 9, die Ventilkamer 4, der Schliesskörper 10, der Führungskanal 22, die Rückstellfeder 23 und der Anschlag 24 sind beispielsweise konzentrisch bezüglich der Ventilachse 16 angeordnet.

Der von dem Förderaggregat 5 erzeugte Druck des Fluids, beispielsweise des Kraftstoffs, wirkt über den Eingangskanal 2 auf den Schliesskörper 10. Übersteigt der Druck stromauf des Ventilsitzes 9 einen von der Federkraft der Rückstellfeder 23 abhängigen vorbestimmten Wert, so hebt der Schliesskörper 10 vom Ventilsitz 9 ab und öffnet auf diese Weise das Rückschlagventil. Nach dem Öffnen des Rückschlagventils strömt das Fluid über den Eingangskanal 5 und einen Eingangsspalt 28 zwischen dem Ventilsitz 9 und dem Schliessabschnitt 11 des Schliesskörpers 10 in die Ventilkammer 4, umströmt den Schliessabschnitt 11, durchströmt den Drosselspalt 18 und verlässt die Ventilkammer 4 über den Ausgangskanal 3, beispielsweise in Richtung der Brennkraftmaschine 6. Auf den Schliessabschnitt 11 des Schliesskörpers 10 wird durch das in die Ventilkammer 4 einströmende Fluid eine Impulskraft ausgeübt, die diesen weiter in vom Ventilsitz 9 abgewandter Richtung entgegen der Federkraft der Rückstellfeder 23 bewegt, bis ein Kräftegleichgewicht erreicht ist. Die Impulskräfte der Strömung steigen mit zunehmendem Durchfluss durch das Rückschlagventil an. Die Federkraft der Rückstellfeder 23 nimmt mit steigendem Hub des Schliesskörpers 10 linear zu.

Durch das Abschalten des Förderaggregates 5 fällt der Druck am Eingangskanal 2 stark ab und der Schliesskörper 10 wird durch die Federkraft der Rückstellfeder 23 und die auf den Schliesskörper 10 in Richtung des Ventilsitzes 9 wirkende Druckkraft der weiterhin unter Druck stehenden Flüssigkeit stromab des Schliesskörpers 10 an den Ventilsitz 9 bewegt, so dass dieser schliesst und ein Rückströmen von Flüssigkeit aus der Ventilkammer 4 oder von weiter stromab in Richtung des Eingangskanals 2 verhindert.

Der Gesamtdruckverlust des Rückschlagventils setzt sich im wesentlichen aus dem Druckverlust am Eingangsspalt 28 und dem Druckverlust des Drosselspaltes 18 zusammen. Der Druckverlust am Eingangsspalt 28 verringert sich bei einem größer werdenden Eingangsspalt 28, also mit zunehmendem Hub des Schliesskörpers 10 in einer Öffnungsrichtung 29. Der Druckverlust am zunächst konstanten Drosselspalt 18 nimmt dagegen mit steigendem Durchfluss zu.

Am Umfang der Ventilkammer 4 weist die Wandung 17 der Ventilkammer 4 einen Entdrosselbereich 30 auf, in dem sich die Ventilkammer 4 in vom Ventilsitz 9 abgewandter Richtung zunehmend in radialer Richtung bezüglich der Ventilachse 16 kontinuierlich oder stufenförmig erweitert. Beispielsweise weist die Wandung 17 der Ventilkammer am Umfang einen stufenförmigen Absatz 31 auf. Der stufenförmige Absatz 31 kann beispielsweise eine Fase oder einen Radius aufweisen.

Gelangt die weiteste Stelle 15 des Schliesskörpers 10 bei einem Hub in Öffnungsrichtung 29 in den Entdrosselbereich 30, vergrößert sich der Drosselspalt 18, bei einem stufenförmigen Absatz 31 beispielsweise stufenförmig. Auf diese Weise wird der Druckverlust am Drosselspalt 18 und die auf den Schliesskörper 10 wirkende Impulskraft stufenförmig verringert.

Die von der Strömung auf den Schliesskörper 10 ausgeübte Impulskraft ist um so größer, je grösser der Durchfluss und je kleiner der Drosselspalt 18 ist. Je größer die Impulskraft ist, desto größer ist der Hub des Schliesskörpers 10 und und desto grösser ist der Abstand des Schliesskörpers 10 vom Ventilsitz 9.

Erfindungsgemäss ist vorgesehen, stromauf des Entdrosselbereichs 30 einen Bereich mit einem konstanten Drosselspalt 18 vorzusehen, so dass die weiteste Stelle 15 des Schliesskörpers 10 bei einem Hub in vom Ventilsitz 9 abgewandter Richtung in Hubrichtung gesehen vor dem Entdrosselbereich 30 einen Bereich mit einem konstanten Drosselspalt 18 durchläuft. Auf diese Weise wird erreicht, dass der Schliesskörper 10 unmittelbar nach dem Abheben des Schliesskörpers 10 vom Ventilsitz 9 eine hohe Impulskraft erfährt, dadurch einen großen Hub ausführt und eine ausreichend vom Ventilsitz 9 entfernte Position einnimmt. Dadurch wird auch erreicht, dass weniger Schmutzpartikel am Eingangsspalt 28 hängen bleiben und bei einem späteren Schliessen die Rückstellbewegung an den Ventilsitz 9 behindern, so dass das erfindungsgemässe Rückschlagventil unempfindlicher gegen Schmutzpartikel im Fluid ist. Gemäss der erfindungsgemässen Ausführung wird vermieden, dass der Schliesskörper bei einem Schwingen des Schliesskörpers 10 an den Ventilsitz 9 anschlagen und dadurch Verschleiß am Ventilsitz 9 verursachen kann. Das Schwingen des Schliesskörpers 10 wird im wesentlichen durch geringe Änderungen des Volumenstroms des Förderaggregats 5 und/oder durch Druckschwankungen stromab des Rückschlagventils verursacht. Der Volumenstrom des Förderaggregats 5 kann beispielsweise bei ungünstigen Betriebsbedingungen absinken, wenn dem Förderaggregat von der Spannungsquelle nur eine verminderte elektrische Spannung zur Verfügung gestellt wird, was beispielsweise bei Kaltstart der Brennkraftmaschine auftreten kann. Außerdem kann eine Verringerung des Fördervolumenstroms durch stark aufgeheizten Kraftstoff verursacht sein, der Dampfblasen im Kraftstoff enthält. Der Drosselspalt 18 ist im Bereich mit dem konstanten Drosselspalt 18 möglichst klein ausgeführt.

Am Umfang der Ventilkammer 4 sind mehrere in axialer Richtung bezüglich der Ventilachse 16 verlaufende Rippen 33 angeordnet. Die Rippen 33 sind beispielsweise gleichmäßig über den Umfang der Ventilkammer 4 verteilt und dienen der Führung des Schliesskörpers 10.

Zur weiteren Verminderung des Schwingens des Schliesskörpers 10 kann vorgesehen sein, eine auf den Schliesskörper 10 wirkende Kraft quer zur Ventilachse 16 zu erzeugen, die eine erhöhte Reibung und Dämpfung in der Schliesskörperführung, beispielsweise im Führungskanal 22, bewirkt. Diese Querkraft entsteht bei einer asymmetrischen Umströmung des Schliesskörpers 10, die durch asymmetrische Ausbildung der den Schliesskörper 10 umgebenden Wandung 17 der Ventilkammer 4 erreicht wird. Zur Erzeugung der asymmetrischen Umströmung haben die Rippen 33 eine unterschiedliche in Umfangsrichtung gemessene Breite.

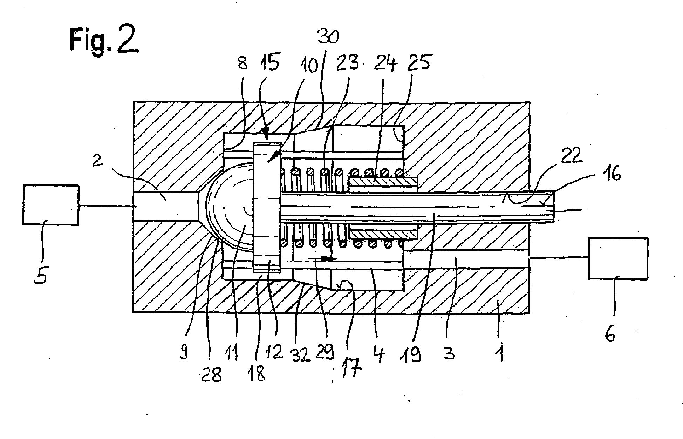

Fig.2 zeigt im Schnitt eine Ansicht eines zweiten Ausführungsbeispiels des erfindungsgemässen Rückschlagventils.
Bei dem Rückschlagventil nach Fig.2 sind die gegenüber dem Rückschlagventil nach Fig.1 gleichbleibenden oder gleichwirkenden Teile durch die gleichen Bezugszeichen gekennzeichnet.

Das Rückschlagventil nach Fig.2 unterscheidet sich von dem Rückschlagventil nach Fig. 1 darin, dass der Entdrosselbereich 30 nicht stufenförmig, sondern konusförmig ausgebildet ist. Anstatt des stufenförmigen Absatzes 31 ist eine kegelförmige Erweiterung 32 der Ventilkammer 4 in Öffnungsrichtung 29 vorgesehen.

Gelangt die weiteste Stelle 15 des Schliesskörpers 10 bei einem Hub in Öffnungsrichtung 29 in den Entdrosselbereich 30, vergrößert sich der Drosselspalt 18 gemäss dem zweiten Ausführungsbeispiel kontinuierlich mit zunehmendem Hub. Auf diese Weise wird der Druckverlust am Drosselspalt 18 und die auf den Schliesskörper 10 wirkende Impulskraft kontinuierlich verringert.

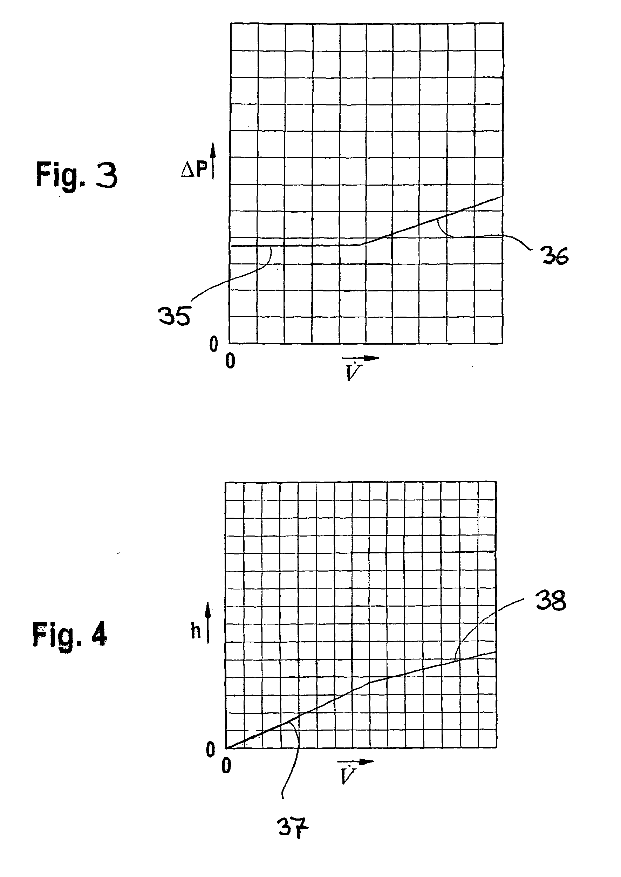

Fig.3 zeigt eine Kennlinie des erfindungsgemäßen Rückschlagventils, dargestellt mit dem Gesamtdruckverlust ΔP auf der Ordinate und dem Volumenstrom bzw. Durchfluss *V̇* auf der Abszisse.

Der Gesamtdruckverlust des Rückschlagventils bleibt nach dem Öffnen des Rückschlagventils in Richtung steigenden Durchflusses in einem ersten Kurvenabschnitt 35 nahezu konstant, da sich die Abnahme des Druck-verlustes am Eingangsspalt 28 und die Zunahme des Druckverlustes am Drosselspalt 18 mit zunehmendem Durchfluss und Hub in etwa ausgleichen.

In einem sich an den ersten Kurvenabschnitt 35 in Richtung steigenden Durchflusses anschliessenden zweiten Kurvenabschnitt 36 nimmt der Gesamtdruckverlust linear zu, jedoch mit einer geringeren Steigung als bei einem Rückschlagventil ohne Entdrosselbereich. Der Gesamtdruckverlust nimmt im zweiten Kurvenabschnitt 36 zu, da die Abnahme des Druckverlustes am Eingangsspalt 28 nur noch sehr gering ist. Da die Zunahme des Druckverlustes im Entdrosselbereich 30 durch die Vergrößerung des Drosselspaltes 18 verringert wird, ist der Anstieg des Gesamtdruckverlustes im zweiten Kurvenabschnitt 36 geringer als bei einem Rückschlagventil ohne Entdrosselbereich. Daher weist das erfindungsgemäße Rückschlagventil bei großem Durchfluss einen vergleichsweise geringen Druckverlust auf. Die stufenförmige Erweiterung 31 im Entdrosselbereich 30 hat gegenüber der kontinuierlichen Erweiterung 32 den Vorteil, dass ein flacherer Verlauf des Gesamtdruckverlustes im zweiten Kurvenabschnitt 36 erzielt wird.

Fig. 4 zeigt eine Kennlinie des erfindungsgemäßen Rückschlagventils, dargestellt mit dem Hub h auf der Ordinate und dem Volumenstrom bzw. Durchfluss *V̇* auf der Abszisse.

Durch den konstanten Drosselspalt 18 nimmt der Hub des Schliesskörpers 10 mit zunehmendem Durchfluss in einem ersten Verlaufsabschnitt 37 mit vergleichsweiser steiler Steigung zu. Durch den Entdrosselbereich 30 wird die steile Zunahme des Hubverlaufs verringert, so dass der Hub in einem zweiten Verlaufsabschnitt 38 mit geringerer Steigung als zuvor mit dem Volumenstrom zunimmt.

Während der Hubverlauf bei einem Rückschlagventil ohne Erweiterung des Drosselspaltes parabelförmig ist, ergibt sich bei dem erfindungsgemässen Rückschlagventil mit der stufenförmigen oder konischen Erweiterung des Drosselspaltes 18 ein nahezu linearer Hubverlauf. Der erste Verlaufsabschnitt 37 und der zweite Verlaufsabschnitt 38 sind daher zumindest annähernd linear ausgebildet. Der Hub des Schliesskörpers 10 des erfindungsgemäßen Rückschlagventils wird durch die axiale Position des stufenförmigen Absatzes 31 oder der kontinuierlichen Erweiterung 32 bezüglich der Ventilachse 16 beeinflusst, so dass der lineare Hubverlauf durch Variation der axiale Position des stufenförmigen Absatzes 31 oder der kontinuierlichen Erweiterung 32 optimierbar ist.

Die axiale Position des stufenförmigen Absatzes 31 oder der kontinuierlichen Erweiterung 32 bezüglich der Ventilachse 16 ist beispielsweise derart ausgewählt, dass der Schliesskörper 10 im zweiten Verlaufsabschnitt 38 eine stabile Position einnimmt, in der nur geringe Schwingungen erfolgen, und dass sich ein geringer Druckabfall bei hohem Durchfluß ergibt.

Der Übergang vom ersten Verlaufsabschnitt 37 zum zweiten Verlaufsabschnitt 38 wird durch die axiale Position des stufenförmigen Absatzes 31 oder der kontinuierlichen Erweiterung 32 bezüglich der Ventilachse 16 bestimmt. Sobald der Schliesskörper 10 in den Entdrosselbereich mit dem stufenförmigen Absatzes 31 oder der kontinuierlichen Erweiterung 32 gelangt, verläuft die Hubkennlinie flacher als zuvor. Da der Schliesskörper 10 im zweiten Verlaufsabschnitt 38 nur noch wenig Hub ausführt, erreicht er den Anschlag 24 beispielsweise nicht. Dies hat den Vorteil, dass der Schliesskörper 10 keine Geräusche über den Anschlag 24 auf das Ventilgehäuse 1 übertragen kann. Wenn der Schliesskörper 10 dagegen den maximalen Hub erreicht und gegen den Anschlag 24 stösst, geht der linear ansteigende zweite Verlaufsabschnitt 38 in einen nicht dargestellten waagerecht verlaufenden Bereich über.

Befindet sich das Rückschlagventil in einem Betriebspunkt des zweiten Verlaufsabschnitt 38, so bewirken geringe Änderungen des Durchflusses im Vergleich zu dem ersten Verlaufsabschnitt 37 nur eine geringe Hubänderung, so dass der Schliesskörper 10 eine vergleichsweise stabile Position einnimmt.

Die stufenförmige Erweiterung 31 im Entdrosselbereich 30 hat gegenüber der kontinuierlichen Erweiterung 32 den Vorteil, dass ein flacherer über dem Volumenstrom aufgetragener Verlauf des Hubs im zweiten Verlaufsabschnitt 38 erzielt wird.

## Patentansprüche

1. Rückschlagventil mit einem Schliesskörper (10), der mit einem Ventilsitz (9) zusammenwirkt, an einer weitesten Stelle (15) einen maximalen Durchmesser aufweist und in einer Ventilkammer (4) axial beweglich angeordnet ist, mit einem Drosselspalt (18) zwischen einer Wandung der Ventilkammer (4) und der weitesten Stelle (15) des Schliesskörpers, wobei die Wandung der Ventilkammer (4) derart ausgebildet ist, dass sich der Drosselspalt (18) einem Hub des Schliesskörpers (10) in vom Ventilsitz (9) abgewandter Richtung in einem Entdrosselbereich (30) erweitert, wobei stromauf des Entdrosselbereichs (30) ein Bereich mit konstantem Drosselspalt (18) vorgesehen ist, **dadurch gekennzeichnet, dass** am Umfang der Ventilkammer (4) mehrere in axialer Richtung bezüglich einer Ventilachse (16) verlaufende Rippen (33) vorgesehen sind, die eine unterschiedliche in Umfangsrichtung der Ventilkammer (4) gemessene Breite aufweisen.

2. Rückschlagventil nach Anspruch 1, **dadurch gekennzeichnet, dass** sich der Drosselspalt (18) im Entdrosselbereich (30) stufenförmig oder kontinuierlich erweitert.

3. Rückschlagventil nach Anspruch 2, **dadurch gekennzeichnet, dass** die Wandung (17) der Ventilkammer (4) im Entdrosselbereich (30) einen stufenförmigen Absatz (31) oder eine konusförmige Erweiterung (32) aufweist.

4. Rückschlagventil nach Anspruch 3, **dadurch gekennzeichnet, dass** die axiale Position des stufenförmigen Absatzes (31) oder der konusförmigen Erweiterung (32) bezüglich einer Ventilachse (16) derart ausgewählt ist, dass sich ein linearer Verlauf des Hubs (h) über dem Durchfluss (V) ergibt.

5. Rückschlagventil nach Anspruch 1, **dadurch gekennzeichnet, dass** der Schliesskörper (10) einen mit dem Ventilsitz (9) zusammenwirkenden Schliessabschnitt (11) aufweist.

6. Rückschlagventil nach Anspruch 5, **dadurch gekennzeichnet, dass** der Schliesskörper (10) einen sich an den Schliessabschnitt (11) anschliessenden Zylinderabschnitt (12) und/oder einen Führungsabschnitt (19) aufweist.

7. Rückschlagventil nach Anspruch 6, **dadurch gekennzeichnet, dass** die weiteste Stelle (15) des Schliesskörpers (10) an dem Schliessabschnitt (11) oder an dem Zylinderabschnitt (12) vorgesehen ist.

## Claims

1. Non-return valve with a closing body (10) which cooperates with a valve seat (9), has a maximum diameter at a widest point (15) and is arranged axially movably in a valve chamber (4), and with a throttle gap (18) between a wall of the valve chamber (4) and the widest point (15) of the closing body, the wall of the valve chamber (4) being designed in such a way that the throttle gap (18) widens in a dethrottling region (30) in the event of a stroke of the closing body (10) in the direction facing away from the valve seat (9), a region with a constant throttle gap (18) being provided upstream of the dethrottling region (30), **characterized in that** a plurality of ribs (33) are provided on the circumference of the valve chamber (4), which run in the axial direction with respect to a valve axis (16) and have a different width measured in the circumferential direction of the valve chamber (4).

2. Non-return valve according to Claim 1, **characterized in that** the throttle gap (18) widens in a stepped or continuous manner in the dethrottling region (30).

3. Non-return valve according to Claim 2, **characterized in that** the wall (17) of the valve chamber (4) in the dethrottling region (30) has a step-shaped shoulder (31) or a conical widening (32).

4. Non-return valve according to Claim 3, **characterized in that** the axial position of the step-shaped shoulder (31) or of the conical widening (32) with respect to a valve axis (16) is selected in such a way that a linear profile of the stroke (h) against the throughflow (v̇) is obtained.

5. Non-return valve according to Claim 1, **characterized in that** the closing body (10) has a closing portion (11) cooperating with the valve seat (9) .

6. Non-return valve according to Claim 5, **characterized in that** the closing body (10) has a cylindrical portion (12) and/or a guide portion (19) adjoining the closing portion (11).

7. Non-return valve according to Claim 6, **characterized in that** the widest point (15) of the closing body (10) is provided on the closing portion (11) or on the cylindrical portion (12).

## Revendications

1. Clapet antiretour comprenant un corps de fermeture (10) qui coopère avec un siège de soupape (9), présente, en son endroit le plus large (15) un diamètre maximal et qui est disposé de manière mobile axialement dans une chambre de clapet (4), avec une fente d'étranglement (18) entre une paroi de la chambre de clapet (4) et l'endroit le plus large (15) du corps de fermeture, la paroi de la chambre de clapet (4) étant réalisée de telle sorte que la fente d'étranglement (18) s'élargisse dans une région d'élargissement (30) dans le cas d'une course du corps de fermeture (10) dans la direction opposée au siège de clapet (9), une région de fente d'étranglement constante (18) étant prévue en amont de la région d'élargissement (30), **caractérisé en ce que** plusieurs nervures (33) s'étendant dans la direction axiale par rapport à un axe de soupape (16) sont prévues sur la périphérie de la chambre de clapet (4), et présentent une largeur différente mesurée dans la direction périphérique de la chambre de clapet (4).

2. Clapet antiretour selon la revendication 1, **caractérisé en ce que** la fente d'étranglement (18) s'élargit dans la région d'élargissement (30) de manière étagée ou en continu.

3. Clapet antiretour selon la revendication 2, **caractérisé en ce que** la paroi (17) de la chambre de clapet (4) présente, dans la région d'élargissement (30), un épaulement (31) de forme étagée ou un élargissement (32) de forme conique.

4. Clapet antiretour selon la revendication 3, **caractérisé en ce que** la position axiale de l'épaulement (31) de forme étagée ou de l'élargissement (32) de forme conique est choisie par rapport à un axe de clapet (16) de telle sorte que l'on obtienne une allure linéaire de la course (h) par rapport au débit (V).

5. Clapet antiretour selon la revendication 1, **caractérisé en ce que** le corps de fermeture (10) présente une portion de fermeture (11) coopérant avec le siège de clapet (9).

6. Clapet antiretour selon la revendication 5, **caractérisé en ce que** le corps de fermeture (10) présente une portion cylindrique (12) se raccordant à la portion de fermeture (11) et/ou une portion de guidage (19).

7. Clapet antiretour selon la revendication 6, **caractérisé en ce que** l'endroit le plus large (15) du corps de fermeture (10) est prévu sur la portion de fermeture (11) ou sur la portion cylindrique (12).
